# EUROPEAN PATENT SPECIFICATION

(11) **EP 1 034 449 B1**
(45) Date of publication and mention of the grant of the patent: **31.07.2002**
(21) Application number: 97950897.5
(22) Date of filing: 25.11.1997
(51) Int. Cl.: G02B 21/30, G02B 21/28, G01B 7/34, G05D 23/00

(54) **TEMPERATURE CONTROL FOR MICROSCOPY**
TEMPERATURKONTROLLE FÜR DIE MIKROSKOPIE
REGULATION DE TEMPERATURE POUR METHODE D'OBSERVATION AU MICROSCOPE

(43) Date of publication of application: 13.09.2000
(73) Proprietor: THE GOODYEAR TIRE & RUBBER COMPANY, Akron, Ohio 44316-0001 (US)
(72) Inventor: ARNOLD, William, Allen, Akron, OH 44310 (US); MARTENY, Perry, Stow, OH 44224 (US); MARCELLI, Angela, Marie, North Canton, OH 44720 (US)
(74) Representative: Leitz, Paul
(86) International application number: US9722513
(87) International publication number: WO9927407

(56) References cited:
- US-A- 5 257 128
- MILLER R J ET AL: "A COMPUTER INTERFACED HIGH-STABILITY TEMPERATURE CONTROLLER AND HEATING STAGE FOR OPTICAL MICROSCOPY" MEASUREMENT SCIENCE AND TECHNOLOGY, vol. 5, no. 8, 1 August 1994, pages 904-911, XP000459458
- LIDE D.R.: "CRC Handbook of Chemistry and Physics. Ready-reference book of chemical and physical data" 1996 , CRC PRESS , US,BOCA RATON XP002071198 see page 12-176 see page 12-179
- PATENT ABSTRACTS OF JAPAN vol. 009, no. 090 (P-350), 19 April 1985 & JP 59 218417 A (OOSAKA SANSO KOGYO KK), 8 December 1984

## Description

This invention relates to temperature control for microscopy.

### Background of the Invention

Those skilled in the materials art recognize that most materials exhibit different properties at different temperatures. A comparison of observable properties of materials at different temperatures may provide valuable information about how materials perform in a product at different temperatures. The present invention is directed to an apparatus and a method whereby such materials may be observed at different temperatures using microscopy, such as atomic force microscopy (afm), as well as light microscopy.

There is disclosed by Miller R J et al. "A computer interfaced high-stability temperature controller and heating stage for optical microscopy" Measurement Science and Technology, vol. 5, no. 8, 1 August 1994, pages 904-911, XP000459458 an apparatus for controlling the temperature of a microscopy sample comprising an external heat insulated housing, an internal heat conducting housing, conduit means for the flow of cooled nitrogen through the housings and means for directing the flow of the gas around the sample.

### Summary of the Invention

An apparatus for controlling the temperature of a microscopy sample is provided as recited in the appended claims.

### Brief Description of Drawings

Fig. 1 illustrates one possible embodiment of the temperature control apparatus of the invention.

Fig. 2 illustrates a side view of a housing of a temperature control apparatus of the invention.

Fig. 3 illustrates a top view of the housing illustrated in Fig. 2.

Fig. 4 illustrates a preferred embodiment of a housing for temperature control of a sample.

Fig. 5 illustrates a top view of a sample holder of the housing of Fig. 4.

### Detailed Description of the Invention

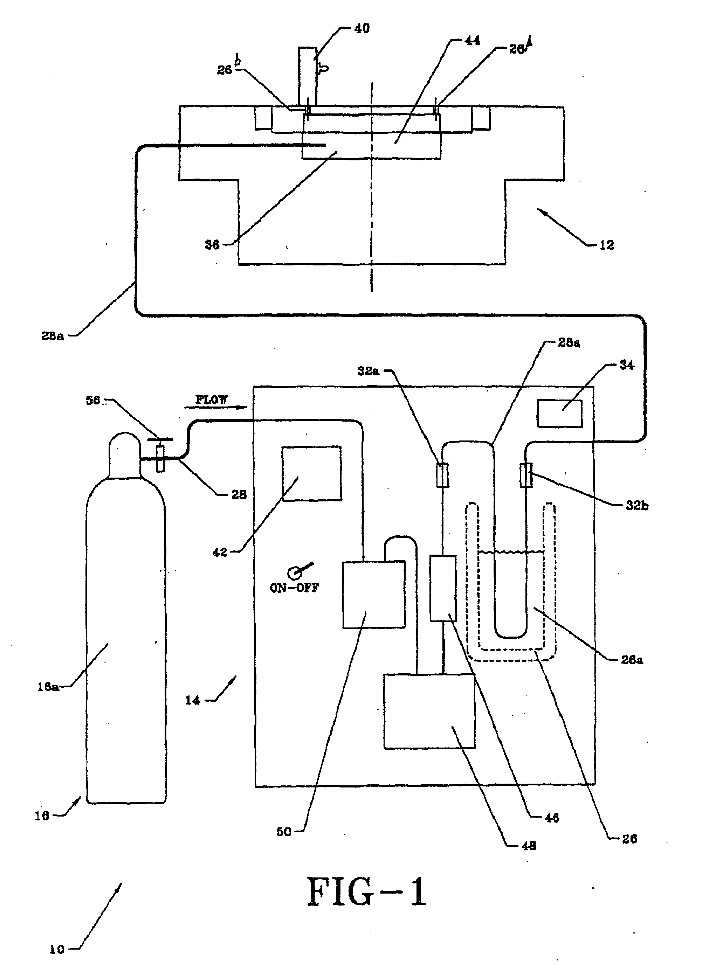

With reference now to Fig. 1, an illustrated variable temperature control device 10 of the invention includes a sample holding portion 12, temperature control center 14, and fluid source 16.

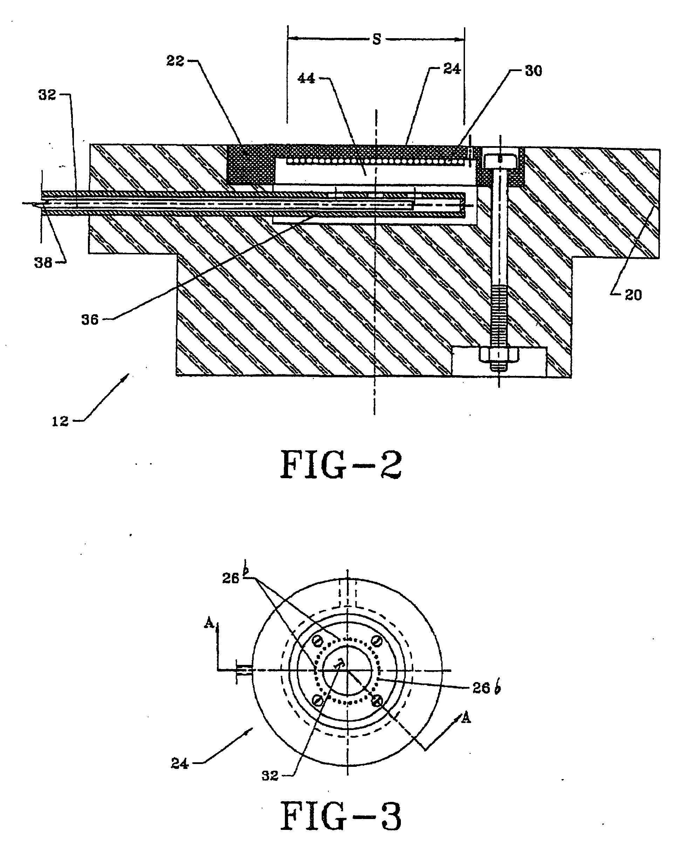

With reference as well to Figs. 2 and 3, sample holding portion 12 comprises an exterior housing 20 made of a highly heat insulating material and construction having a heat conductivity of 0.00001 to 0.25, preferably 0.02 to 0.15 W/m-K (watt per meter Kelvin), and an interior housing 22 made of a low heat insulating material having a heat conductivity of 20 to 2000, preferably 50 to 400 W/m-K, and sample holder 24.

Examples of highly heat insulating materials used to make exterior housing 20 are polyvinyl chloride (PVC), celluloid, particle board, cork, and foamed polyurethane. Examples of low heat insulating material used to make the interior housing 22 are aluminum, copper, carbon steel, pyrolytic graphite, gold and brass.

A highly heat insulating material is used to make outer housing 20 to help prevent heat transfer to or from external housing 20 to the surroundings, which saves energy and helps maintain a constant temperature within external housing 20 with little or no fluctuation. The low heat insulating material (i.e. highly heat conductive material) used to make internal housing 22 aids in quickly drawing heat from or transferring heat to the sample so that a substantially constant sample temperature can be quickly achieved and maintained using the temperature control devices associated with temperature control center 14.

The construction of external housing 20 may enhance the insulating effect of the material used to make the housing. For example, if a material having a heat conductivity outside the range described above is used, and the material is used to make a double walled exterior housing, the effective insulating properties of the exterior housing may be in the range described, even though the material used has properties outside the range.

The temperature at which a sample is maintained during microscopy may also have some bearing on the materials chosen for fabricating the temperature control device of the invention. For example, if samples are maintained at 200° C, PVC may soften and break down, and coated cork or particle board may be preferred for making exterior housing 20. Other material substitutions will be apparent to those skilled in the art.

In the illustrated embodiment, temperature control is achieved using counter balancing temperature raising and lowering devices. When low temperatures are desired, fluid 16a, such as nitrogen (N₂) gas, is passed through cooling means 26a in refrigeration means 26. Cooling means 26a can conveniently be a liquefied or solidified gas, such as N₂, CO₂, He, or Ar. Those skilled in the art will recognize that mechanical refrigeration can be used for cooling means 26a, especially if only mild cooling is needed.

When higher temperatures are desired, heaters 30,34,36 may be employed to raise the temperature of temperature controlling fluid 16a.

When pressurized gas is used as the temperature controlling fluid 16a, the flow of the gas is controlled by pressure control valve 56, flow regulating solenoid valve 50, and flow buffer 48. Flow buffer 48 provides a reservoir for compression and expansion of the gas to help smooth out the gas flow since solenoid valve 50 operates only to turn on and turn off the flow of the gas.

A pressure of 5 to 30 psi (pounds per square inch) corresponding to 34,5 to 207 kPa for the temperature controlling gas in the system is desirable, and pressures in the lower end of the range are preferred.

The controlled flow of fluid then passes through refrigerator means 26. If cooling is desired, the gas flows through cooling means 26a and exits refrigeration means 26 through tubing 28a. Optionally heater 34 may be placed adjacent tubing 28a downstream of refrigeration means 26, and optional thermocouple 32b may be placed in tubing 28a in the proximity of heater 34.

Additional thermocouples may be provided, for example thermocouple 32a in exterior housing 20, in the path of temperature controlling fluid 16a as desired.

The temperature of the fluid 16a can be controlled somewhat by the choice of cooling means 26a and by the amount of time fluid 16a spends in cooling means 26a, such time being dependant on the flow rate of fluid 16a and the amount of tubing 28a passing through cooling means 26a. Heaters 30,34,36, in temperature control center 14, external housing 20, and internal housing 22 may be used in conjunction with cooling means 26a to precisely control the temperature of fluid 16a. The temperature of fluid 16a may be monitored by thermocouples 32,32a,32b. The heaters 30,34,36, and fluid flow regulator 50. may be controlled by computer 42, and optionally other computers, in response to input received from thermocouples 32,32a,32b and flow meter 46.

If different thermocouples are used in different portions of the apparatus, separate computers may be required to handle the information gathered from each thermocouple.

In the illustrated embodiment, ANSI type T sub miniature thermocouples, available from Omega Engineering, Inc, Stamford, Conn. were used.

In the illustrated embodiment, nitrogen is used as temperature controlling fluid 16a, and the nitrogen is passed from tank 16 through tubing 28 into tubing 28a which passes through refrigeration means 26. Tubing 28 can be a polymer such as rubber or polypropylene or the like, or a metal such as copper. Tubing 28a is a material which can withstand very low temperatures that may potentially be encountered in refrigeration means 26, and is preferably a metal such as copper.

Refrigeration means 26 may be mechanical refrigeration means known in the art, or it may simply be an insulating double walled container, known as a Dewar flask, used to contain liquefied gases, or solidified gases or liquids.

In the illustrated embodiment, liquid nitrogen is used in a Dewar flask as the refrigeration means 26 for controlling the temperature of fluid 16a.

From temperature control unit 14, temperature controlling fluid 16a is directed into exterior housing 20, in the illustrated embodiment through conduit 38, over second optional heater 36, and into chamber 44. Chamber 44 serves to stabilize the temperature around the sample by collecting a quantity of the temperature controlling fluid at the desired temperature. A third optional heater 30 may be located directly adjacent sample holder 24.

When microscopy at very low temperatures is desired, atmospheric air must be kept away from the sample to prevent icing or frosting of the sample from atmospheric moisture. To help maintain an envelope of dry fluid around the sample, means for creating a chamber above the sample may be provided, or an optional flow tube 40 may be provided above the sample to direct additional dry fluid over the top of the sample.

In the illustrated embodiment, vent holes 26b in sample bolder 24 (a portion of internal housing 22) permit temperature controlling fluid 16a to flow out of chamber 44 around the sample, controlling the temperature of the sample and enveloping the sample in dry fluid which forces atmospheric moisture away from the sample.

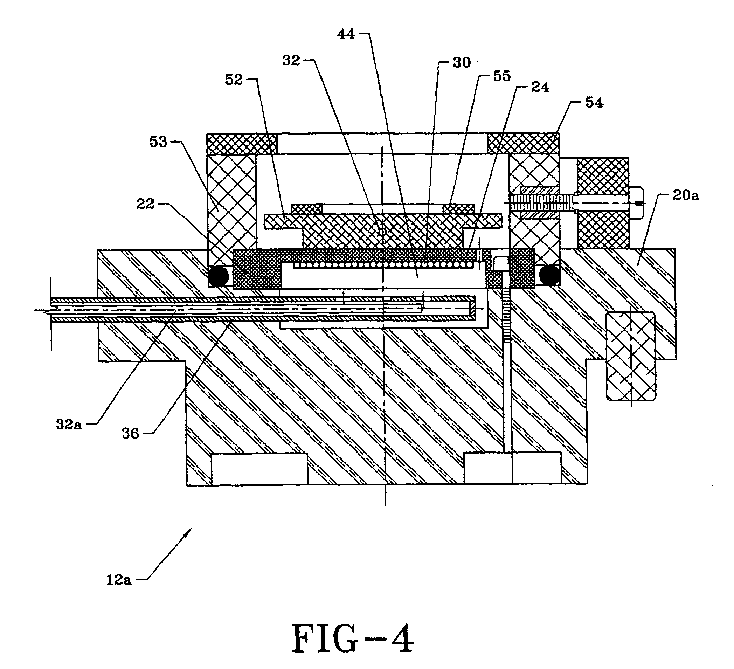

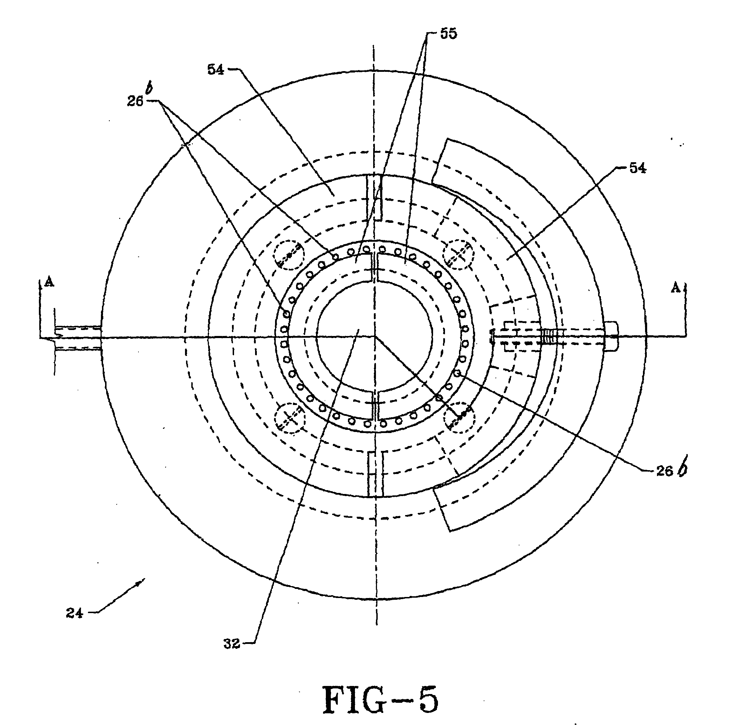

With reference now to Figs. 4 and 5, in a preferred embodiment of the invention, sample holding portion 12a comprises exterior housing 20a similar to that described in Fig. 2, with an interior housing 22 which is substantially the same as that described in Fig. 2, sample holding portion 12a also comprises, however, deflector 52 contained within insulated ring 53. Deflector 52 rests over sample holder 24 and creates a protective area around the sample that reduces the exposure of the sample to the atmosphere.

In the illustrated embodiment of Fig. 4, vents 26b were found to be sufficient to keep moisture away from the sample when baffles 54 were placed over deflector 52 to help control the flow of fluid away from sample 55. In the illustrated embodiment, baffles 54 comprise flat, semi circular pieces of plastic, for example polycarbonate, which are designed to fit on the top of insulated ring 53 to enclose a circle. The sample is accessible by the head of an atomic force microscope, or other microscope, through the center of the circle formed by the semi circular pieces, and the temperature controlling fluid escapes through the center of the circle, creating a positive pressure over the sample, as compared to atmospheric pressure, that prevents atmospheric moisture from entering the deflector and reaching the sample.

Those skilled in the art will recognize other means that may be used to keep moisture away from the sample.

Thermocouple 32 is provided adjacent to the sample to help monitor the temperature of the sample.

Computer 42, and optionally other computers, may be provided to accept input from the various thermocouples used in the apparatus, and use the data collected to control the various heaters, the flow rate of temperature controlling fluid 16a, and the refrigeration means 26 to control the temperature automatically.

In the illustrated embodiment, the liquid nitrogen used for the cooling means 26a in refrigeration means 26 has a boiling point of -196° C, and a temperature of -100° C ±0.4° C was achieved when a PVC external housing 20 and an aluminum inner housing 22 were used. It is believed that lower temperatures can be achieved, but this was left to further experimentation since the durability of the head of the afm microscope (used in this experiment) at low temperatures is not known at this time. It was found that temperatures could be maintained without using heaters 30,34,36 for this test, but it is believed that heaters 30,34,36 will have utility in other applications.

While the invention has been specifically illustrated and described, those skilled in the art will recognize that the invention may be variously modified and practiced without departing from the scope of the invention. The invention is limited only by the following claims.

## Claims

1. An apparatus for controlling the temperature of a sample (55) to be subject to microscopy, said sample being positioned on a sample holder (24), comprising an external housing (20) made of a highly heat insulating material, an internal housing (22) made of a highly heat conducting material within said external housing (20), conduit means (28, 28a) for the flow of a temperature controlling gas between said internal and external housing, **characterized**
**by** the internal housing (22) filling substantially a recess in the external housing (20) so that a chamber (44) is formed by said internal and external housing
by the sample holder (24) being a portion of the internal housing (22); and
by vent holes (26b) in the sample holder (24) for directing the flow of said temperature controlling gas (16a) to flow out of the chamber (44) around said sample.

2. The apparatus of claim 1 further comprising a thermocouple (32) associated with said sample for measuring the temperature of said sample.

3. The apparatus of claim 2 further comprising a heater (36) associated with said sample for heating said sample.

4. The apparatus of claim 3 further comprising heaters (30,34) contained in said external and interior housings for heating said temperature controlling gas (16a).

5. The apparatus of claim 1 further comprising cooling means (26a) for reducing the temperature of said temperature controlling gas (16a).

6. The apparatus of claim 1 wherein said exterior housing (20) is made of polyvinyl chloride (PVC).

7. The apparatus of claim 1 wherein said internal housing (22) is made of aluminum.

8. The apparatus of claim 1 wherein the temperature of said sample (55) can be maintained at -270° C to 200° C.

9. The apparatus of claim 2 wherein said sample (55) is mounted on a sample holder (24) made of highly thermally conductive material and said thermocouple (32) is mounted between said sample and said sample holder.

10. The apparatus of claim 1 further comprising a computer (42) for monitoring the temperature of the sample (55) and controlling the flow of the temperature controlling gas (16a) to maintain the temperature at a constant level.

11. The apparatus of claim 4 further comprising a computer (42) for monitoring the temperature of the sample (55) and controlling the flow of the temperature controlling gas (16a) and the output of the heaters (30,34,36) to maintain the temperature at a constant level.

12. The apparatus of claim 1 wherein said exterior housing (20) has a heat conductivity of 0.00001 to 0.25 W/m-K.

13. The apparatus of claim 1 wherein said exterior housing (20) comprises a material selected from the group comprising polyvinylchloride, cellulite, cork, particle board, and foamed polyurethane.

14. The apparatus of claim 1 wherein said interior housing (22) has a heat conductivity of 20 to 2000 W/m·K.

15. The apparatus of claim 1 wherein said interior housing (22) comprises a material selected from the group comprising aluminum, carbon steel, pyrolytic graphite, gold and brass.

16. The apparatus of claim 1 wherein said refrigeration means (26) comprises liquefied or solidified N₂, CO₂, He or Ar.

17. The apparatus of claim 1 comprising further an insulating ring (53), a deflector (52) contained within insulating ring and resting over sample holder (24), and baffles (54) fitted on top of the insulating ring, for partially enclosing said sample (55) and maintaining a greater than atmospheric pressure around said sample.

## Patentansprüche

1. Vorrichtung zum Steuern der Temperatur einer Probe (55), die einer Mikroskopie unterzogen werden soll, wobei die Probe auf einem Probenhalter (24) angeordnet ist, umfassend ein äußeres Gehäuse (20), das aus einem stark wärmeisolierenden Material hergestellt ist, ein inneres Gehäuse (22), das aus einem stark wärmeleitfähigen Material hergestellt ist, innerhalb des äußeren Gehäuses (20), einem Leitungsmittel (28, 28a) für die Strömung eines Temperatursteuergases zwischen dem inneren und dem äußeren Gehäuse, **dadurch gekennzeichnet, daß**
das innere Gehäuse (22) eine Ausnehmung in dem äußeren Gehäuse (20) im wesentlichen füllt, so daß durch das innere und das äußere Gehäuse eine Kammer (44) gebildet ist,
der Probenhalter (24) ein Teil des inneren Gehäuses (22) ist, und Entlüftungslöcher (26b) in dem Probenhalter (24) vorgesehen sind, um die Strömung des Temperatursteuergases (16a) derart zu lenken, daß es aus der Kammer (44) heraus um die Probe herum strömt.

2. Vorrichtung nach Anspruch 1, die ferner ein der Probe zugeordnetes Thermoelement (32) zum Messen der Temperatur der Probe umfaßt.

3. Vorrichtung nach Anspruch 2, die ferner eine der Probe zugeordnete Heizung (36) zum Erwärmen der Probe umfaßt.

4. Vorrichtung nach Anspruch 3, die ferner in dem äußeren und in dem inneren Gehäuse enthaltene Heizungen (30, 34) zum Erwärmen des Temperatursteuergases (16a) umfaßt.

5. Vorrichtung nach Anspruch 1, die ferner ein Kühlmittel (26a) zum Herabsetzen der Temperatur des Temperatursteuergases (16a) umfaßt.

6. Vorrichtung nach Anspruch 1, wobei das äußere Gehäuse (20) aus Polyvinylchlroid (PVC) hergestellt ist.

7. Vorrichtung nach Anspruch 1, wobei das innere Gehäuse (22) aus Aluminium hergestellt ist.

8. Vorrichtung nach Anspruch 1, wobei die Temperatur der Probe (55) auf -270°C bis 200°C gehalten werden kann.

9. Vorrichtung nach Anspruch 2, wobei die Probe (55) auf einem Probenhalter (24) montiert ist, der aus stark wärmeleitfähigem Material hergestellt ist, und das Thermoelement (32) zwischen der Probe und dem Probenhalter montiert ist.

10. Vorrichtung nach Anspruch 1, die ferner einen Computer (42) zum Überwachen der Temperatur der Probe (55) und zum Steuern der Strömung des Temperatursteuergases (16a) umfaßt, um die Temperatur auf einem konstanten Niveau zu halten.

11. Vorrichtung nach Anspruch 4, die ferner einen Computer (42) zum Überwachen der Temperatur der Probe (55) und zum Steuern der Strömung des Temperatursteuergases (16a) und der Ausgangsleistung der Heizungen (30, 34, 36) umfaßt, um die Temperatur auf einem konstanten Niveau zu halten.

12. Vorrichtung nach Anspruch 1, wobei das äußere Gehäuse (20) eine Wärmeleitfähigkeit von 0,00001 bis 0,25 W/m-K aufweist.

13. Vorrichtung nach Anspruch 1, wobei das äußere Gehäuse (20) ein Material umfaßt, das aus der Gruppe ausgewählt ist, die Polyvinylchlorid, Cellulite, Kork, Spanplatte und geschäumtes Polyurethan umfaßt.

14. Vorrichtung nach Anspruch 1, wobei das innere Gehäuse (22) eine Wärmeleitfähigkeit von 20 bis 2000 W/m·K aufweist.

15. Vorrichtung nach Anspruch 1, wobei das innere Gehäuse (22) aus einem Material besteht, das aus der Gruppe ausgewählt ist, die Aluminium, Kohlenstoffstahl, pyrolytisches Graphit, Gold und Messing umfaßt.

16. Vorrichtung nach Anspruch 1, wobei die Kühlungseinrichtung (26) verflüssigtes oder verfestigtes N₂, CO₂, He oder Ar umfaßt.

17. Vorrichtung nach Anspruch 1, die ferner einen isolierenden Ring (53), eine Ablenkeinrichtung (52), die in dem isolierenden Ring enthalten ist und über dem Probenhalter (24) ruht, und Prallplatten (54) umfaßt, die oben auf dem isolierenden Ring befestigt sind, um die Probe (55) teilweise zu umschließen und einen Druck, der größer als Atmosphärendruck ist, um die Probe herum aufrechtzuerhalten.

## Revendications

1. Appareil pour régler la température d'un échantillon (55) qui doit être soumis à une observation au microscope, ledit échantillon étant positionné sur un porte-échantillon (24), comprenant un logement externe (20) constitué d'un matériau manifestant une isolation thermique élevée, et un logement interne (22) constitué d'un matériau manifestant une conductibilité thermique élevée à l'intérieur dudit logement externe (20), des moyens de conduire (28, 28a) pour l'écoulement d'un gaz réglant la température entre ledit logement interne et ledit logement externe, **caractérisé par le fait que** le logement interne (22) remplit essentiellement un évidement pratiqué dans le logement externe (20) de telle sorte que l'on obtient une chambre (44) formée par lesdits logement interne et externe, **par le fait que** le porte-échantillon (24) représente une portion du logement interne (22), et **par le fait que** l'on prévoit des orifices d'évacuation (26b) dans le porte-échantillon (24) pour diriger l'écoulement dudit gaz (16a) réglant la température à l'extérieur de la chambre (44) autour dudit échantillon.

2. Appareil selon la revendication 1, comprenant en outre un thermocouple (32) associé audit échantillon pour mesurer la température dudit échantillon.

3. Appareil selon la revendication 2, comprenant en outre un dispositif de chauffage (36) associé audit échantillon pour chauffer ledit échantillon.

4. Appareil selon la revendication 3, comprenant en outre des dispositifs de chauffage (30, 34) que contiennent lesdits logements externe et interne pour chauffer ledit gaz (16a) réglant la température.

5. Appareil selon la revendication 1, comprenant en outre un moyen de refroidissement (26a) pour réduire la température dudit gaz (16a) réglant la température.

6. Appareil selon la revendication 1, dans lequel ledit logement externe (20) est réalisé en chlorure de polyvinyle (PVC).

7. Appareil selon la revendication 1, dans lequel ledit logement interne (22) est réalisé en aluminium.

8. Appareil selon la revendication 1, dans lequel la température dudit échantillon (55) peut être maintenue de -270 °C à 200 °C.

9. Appareil selon la revendication 2, dans lequel ledit échantillon (55) est monté sur un porte-échantillon (24) constitué d'un matériau manifestant une conductibilité thermique élevée et ledit thermocouple (32) est monté entre ledit échantillon et ledit porte-échantillon.

10. Appareil selon la revendication 1, comprenant en outre un ordinateur (42) pour surveiller la température de l'échantillon (55) et pour régler l'écoulement du gaz (16a) réglant la température afin de maintenir la température à un niveau constant.

11. Appareil selon la revendication 4, comprenant en outre un ordinateur (42) pour surveiller la température de l'échantillon (55) et pour régler l'écoulement du gaz (16a) réglant la température et la sortie des dispositifs de chauffage (30, 31, 36) afin de maintenir la température à un niveau constant.

12. Appareil selon la revendication 1, dans lequel ledit logement externe (20) possède une conductibilité thermique de 0,00001 à 0,25 W/m.K.

13. Appareil selon la revendication 1, dans lequel ledit logement externe (20) comprend un matériau choisi parmi le groupe comprenant du chlorure de polyvinyle, du celluloïde, du liège, du bois reconstitué et du polyuréthanne transformé en mousse.

14. Appareil selon la revendication 1, dans lequel ledit logement interne (22) possède une conductibilité thermique de 20 à 2000 W/m.K.

15. Appareil selon la revendication 1, dans lequel ledit logement interne (22) comprend un matériau choisi parmi le groupe comprenant de l'aluminium, de l'acier au carbone, du graphite pyrolytique, de l'or et du laiton.

16. Appareil selon la revendication 1, dans lequel ledit moyen de réfrigération (26) comprend de l'azote liquide ou solidifié, du dioxyde de carbone, de l'hélium ou de l'argon.

17. Appareil selon la revendication 1, comprenant en outre un anneau d'isolation (53), un déflecteur (52) que contient l'anneau d'isolation et qui s'appuie par-dessus le porte-échantillon (24), et des chicanes (54) venant se disposer par-dessus l'anneau d'isolation, pour renfermer en partie ledit échantillon (55) et maintenir une pression supérieure à la pression atmosphérique autour dudit échantillon.
